# EUROPEAN PATENT APPLICATION

(11) **EP 4 645 849 A1**
(43) Date of publication of application: **05.11.2025**
(21) Application number: 23922260.7
(22) Date of filing: 08.08.2023
(51) Int. Cl.: H04N 9/31

(54) **AUDIO-VISUAL DEVICE**

(30) Priority: 16.02.2023 CN 202320302689 U
(71) Applicant: Shenzhen Roborock Innovation Technology Co., Ltd., Shenzhen, Guangdong 518000 (CN); Beijing Roborock Technology Co., Ltd., Beijing 102206 (CN)
(72) Inventor: YU, Guang, Shenzhen, Guangdong 518000 (CN); HUO, Haijun, Shenzhen, Guangdong 518000 (CN); GAO, Wenjie, Shenzhen, Guangdong 518000 (CN)
(74) Representative: Manitz Finsterwald Patent- und Rechtsanwaltspartnerschaft mbB
(86) International application number: PCT/CN2023/111711
(87) International publication number: WO 2024/169137

(57) **Abstract**

The present application provides an audio-visual device. By providing loudspeakers on a top surface and a peripheral surface, respectively, the diversity of sound propagation directions is increased, so that the problem that the location of a user is limited by a single sound propagation direction is solved. The audio-visual device comprises: a device body, wherein the device body comprises a top surface and a peripheral surface surrounding the top surface; and sky loudspeakers and a side loudspeaker, wherein the sky loudspeakers are arranged on the top surface of the device body, and the side loudspeaker is arranged on the peripheral surface of the device body. The present application is mainly used for projecting images.

## Description

The present application claims priority to Chinese Patent Application No. 202320302689.8 entitled "AUDIO-VISUAL DEVICE" filed with China National Intellectual Property Administration on February 16, 2023, which is incorporated herein by reference in its entirety.

### TECHNICAL FIELD

The present application relates to the field of household appliances, and in particular, to an audio-visual device.

### BACKGROUND

With the development of scientific technology, audio-visual devices are widely used in all aspects of daily life, such as remote meetings, online teaching, and video watching. As a new type of audio-visual device, the projector is favored by more and more users due to its lightness and flexible mobility. The projector is configured to project images onto the projection surface, such as a screen or a wall, while simultaneously playing sound, providing users with all-around audio-visual enjoyment.

The inventors are aware that the speakers of the existing projectors are usually arranged on the side surface or the front surface facing the projection surface of the projector. When a user is at different positions around the speaker main body, the sound effect varies significantly. For example, when the speaker and the user are on different sides of the projector, the volume of the speaker is greatly reduced, requiring the volume to be turned up, which leads to excessive consumption and fails to ensure the sound effect.

### SUMMARY

### (I) Objective of Application

The objective of the present application is to provide an audio-visual device to solve the problem that a single sound propagation direction limits the position of the user.

### (II) Technical Solution

To solve the above problem, the present application provides an audio-visual device. The audio-visual device includes a device main body, where the device main body includes a top surface and a surrounding surface surrounding the top surface; and
a sky speaker and a side speaker, where the sky speaker is arranged on the top surface, and the side speaker is arranged on the surrounding surface.

In some embodiments, the number of the sky speakers is two, the two sky speakers are spaced apart from each other in a width direction of the top surface, and the width direction is perpendicular to an image output direction of the device main body.

In some embodiments, the center distance between the two sky speakers is greater than half of the extension distance of the top surface in the width direction.

In some embodiments, the device main body is configured to project an image through the top surface;

a recess is arranged on the top surface, the recess extends in the width direction of the top surface, a projection window is provided on the recess, and the device main body is configured to project the image through the projection window;
the two sky speakers are arranged on both sides of the projection window.

In some embodiments, a sound propagation direction of the sky speaker is vertically upward or inclined upward.

In some embodiments, the device main body is configured to project the image onto a projection surface, the surrounding surface of the device main body is formed by sequentially connecting a front surface, a first side surface, a back surface, and a second side surface end to end, and the front surface is opposite to the projection surface;
the side speaker is arranged on the back surface, the first side surface, and/or the second side surface.

In some embodiments, the sky speaker includes a sky speaker body and a sky speaker sound chamber, and the side speaker includes a side speaker body and a side speaker sound chamber;
the sky speaker sound chamber is connected to the sky speaker body, and the side speaker sound chamber is connected to the side speaker body.

In some embodiments, the audio-visual device further includes a common sound chamber, where both the sky speaker and the side speaker are connected to the common sound chamber.

In some embodiments, the device main body includes a housing, an image output unit, and a control unit;
the housing includes an accommodating cavity, the image output unit, the control unit, the sky speaker, and the side speaker are all at least partially arranged in the accommodating cavity, and the control unit is electrically connected to the image output unit, the sky speaker, and the side speaker;
the housing includes the top surface and the surrounding surface, a projection window is arranged on the top surface, and the image output unit corresponds to the projection window to output an image through the projection window.

In some embodiments, the device main body further includes a heat dissipation unit, and the heat dissipation unit is arranged in the accommodating cavity and is electrically connected to the control unit;
a heat dissipation opening is formed on the surrounding surface, and the heat dissipation unit corresponds to the heat dissipation opening to dissipate heat through the heat dissipation opening.

### (III) Beneficial Effects

The present application provides an audio-visual device. The device main body includes the top surface and the surrounding surface surrounding the top surface. The sky speaker is arranged on the top surface, and the sound propagation direction is upward. When the user is located at different positions around the device main body, the sound effect of the sky speaker does not change significantly, thereby ensuring stability of the sound effect. In addition, in combination with the side speaker, more sound effects can be generated through sound control, thereby ensuring diversity of the sound effect.

### BRIEF DESCRIPTION OF THE DRAWINGS

FIG. 1 is a schematic structural diagram of a first audio-visual device according to the embodiments of the present application;
FIG. 2 is a schematic structural diagram of a second audio-visual device according to the embodiments of the present application.

Reference numerals in the figures:
device main body 100, sky speaker 200, side speaker 300, top surface 110, surrounding surface 120, recess 111, heat dissipation opening 112.

### DETAILED DESCRIPTION

In the description of the present application, it should be understood that directions or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", and the like are those shown based on the accompanying drawings, are merely intended to facilitate and simplify description rather than to indicate or imply that the indicated apparatus or element must have a specific direction and be structured and operated according to the specific direction, and should not be construed as limiting the present application.

In addition, the terms "first" and "second" are used herein for descriptive purposes only and should not be construed as indicating or implying relative importance or implicitly indicating the number of technical features described. Thus, features defined by "first" and "second" may explicitly or implicitly include one or more of the features. In the description of the present application, "plurality" refers to two or more, unless otherwise explicitly and specifically defined.

In the present application, unless otherwise clearly specified and defined, the terms "mount", "interconnect", "connect", and "fix" should be understood in their broad sense. For example, they may be fixed connection, detachable connection, or integrated connection; or mechanical connection or electric connection; or direct connection, indirect connection via an intermediate, or internal communication between two elements. For those of ordinary skill in the art, the specific meanings of the aforementioned terms in the present application can be understood according to specific conditions.

The preferred embodiments of the present application are described below with reference to the accompanying drawings. It should be understood that the preferred embodiments described herein are merely intended to illustrate and explain the present application and do not limit the present application.

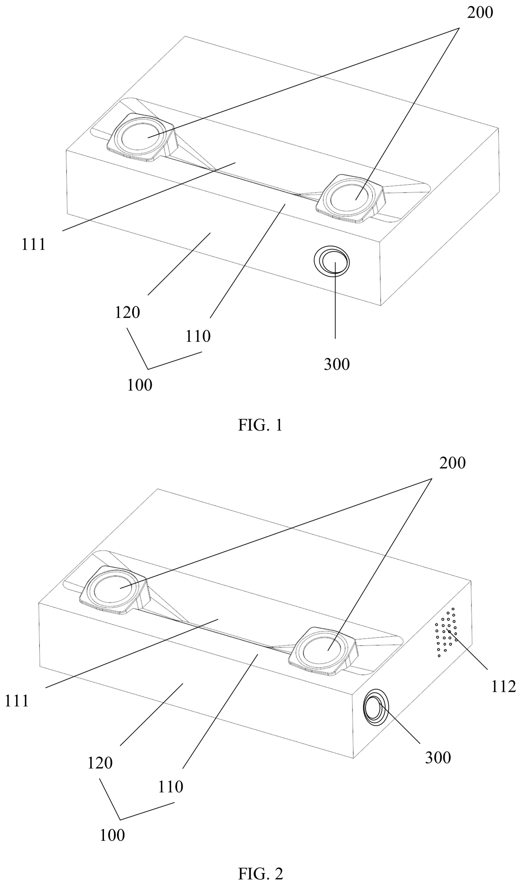

Referring to FIG. 1, the embodiments of the present application provide an audio-visual device. The audio-visual device includes a device main body 100, where the device main body 100 includes a top surface 110 and a surrounding surface 120 surrounding the top surface 110; and
a sky speaker 200 and a side speaker 300, where the sky speaker 200 is arranged on the top surface 110 of the device main body 100, and the side speaker 300 is arranged on the surrounding surface 120 of the device main body 100.

The device main body 100 is the main body structure of the audio-visual device, and is configured to be placed on a support such as a table surface or a supporting plate to project the image. The device main body 100 generally includes a housing, and the housing includes an accommodating cavity. Other constituent structures of the device main body 100, the sky speaker 200, and the side speaker 300 are connected to the housing, and are at least partially located in the accommodating cavity. The device main body 100 may have various shapes, such as a flat square structure and a flat disk shape. The top surface 110 of the device main body 100 refers to an upward surface of the device main body 100 during normal use. The device main body 100 further includes a bottom surface facing away from the top surface 110, and the bottom surface is opposite to the support. The top surface 110 and the bottom surface are arranged in parallel and opposite to each other, and are connected to the surrounding surface 120 to jointly define the accommodating cavity in an enclosing manner. The surrounding surface 120 refers to a peripheral surface located between the top surface 110 and the bottom surface and surrounding the top surface 110. More specifically, the surrounding surface 120 includes a front surface, a first side surface, a back surface, and a second side surface that are sequentially connected end to end to form a continuous enclosure. The front surface is configured to face the projection surface. The front surface, the first side surface, the back surface, and the second side surface may be planes or arc-shaped surfaces. For example, when the device main body 100 is of a flat disk-shaped structure, the front surface, the first side surface, the back surface, and the second side surface are all arc-shaped surfaces that are circumferentially connected to form a cylindrical surface. When the device main body 100 is of a flat square structure, the front surface, the first side surface, the back surface, and the second side surface are merely planes and are connected perpendicular to each other. The sky speaker 200 is arranged on the top surface 110, and the side speaker 300 is arranged on the surrounding surface 120. During use, the sound propagation of the sky speaker 200 may be vertically upward, i.e., perpendicular to the horizontal plane. In other words, when the top surface 110 is horizontal, the propagation is perpendicular to the top surface. Alternatively, in some other embodiments, the sound propagation of the sky speakers 200 may be inclined upward. For example, the sound propagation direction of the sky speakers 200 is inclined toward one side facing away from the projection surface, including a vertically upward sound component and a sound component propagating away from the projection surface. This enables the sky speaker 200 to simulate a shifting sound from high to low positions, such as the sound of raindrops falling, while bringing the sound propagation closer to the user, thereby ensuring the sound effect. The sound propagation direction of the side speaker 300 may be a horizontal direction or may be inclined relative to the horizontal direction. For example, during use, the top surface 110 is horizontal, the surrounding surface 120 and the top surface 110 form an included angle other than 90 degrees, and the sound propagation direction of the side speaker 300 and the horizontal direction also form an included angle other than 90 degrees. For example, the sound propagation direction of the side speaker 300 is inclined downward, so that a low-positioned sound can be simulated, such as the sound coming from below the ground. The top surface 110 is not limited to a plane, and may also have an irregular shape. For example, in the embodiment where the audio-visual device is a short-throw or ultra-short-throw projection device, the device main body 100 may project the image through the top surface 110. The top surface 110 is provided with a recess 111 recessed toward one side of the accommodating cavity, and the sky speaker 200 may be located at the recess 111, so that the appearance of the audio-visual device is more diverse and aesthetically pleasing. This will be further described below in conjunction with specific embodiments.

When the audio-visual device is used, the image output direction is inclined upward relative to the top surface 110, the image output is typically in the form of a light beam, and the image output direction refers to the direction of the central axis of the light beam. Users are usually located outside the surrounding surface 120 of the device main body 100, and the sound propagation direction of the sky speaker 200 is upward, so that the users located on various sides of the device main body 100 can obtain a good sound effect through the sky speaker 200. This avoids the degradation of the sound effect caused by the user being located on one side facing away from the side speaker 300, which affects the sound effect. In addition, the vertical sound propagation of the sky speaker 200 enables the simulation of a wider variety of sounds, for example, the simulation of a gradually shifting sound from high to low positions, such as the sound of raindrops or objects falling. In combination with the side speaker 300, the stereophonic effect of the sound can be achieved, thereby ensuring the audio effect of the audio-visual device.

The audio-visual device provided by the present application increases the diversity of the sound propagation direction by separately arranging the speaker on the top surface and the surrounding surface, thereby solving the problem that a single sound propagation direction limits the position of the user. In the prior art, the speaker of the projector is usually arranged on the side surface or the front surface facing the projection surface of the projector main body, resulting in the single sound propagation direction. When the user is at different positions around the speaker main body, the sound effect varies significantly.

In the technical solution of the present application, the device main body includes the top surface and the surrounding surface surrounding the top surface. The sky speaker is arranged on the top surface, and the sound propagation direction is upward. When the user is located at different positions around the device main body, the sound effect of the sky speaker does not change significantly, thereby ensuring the stability of the sound effect. In addition, in combination with the side speaker, more sound effects can be generated through the sound control, thereby ensuring the diversity of the sound effect.

In one embodiment, the number of the sky speaker 200 is one. The sky speaker is located on the top surface 110 and may be located at the central position in the width direction of the top surface or at a position deviated from the central position in the width direction of the top surface. The width direction of the top surface is perpendicular to the image output direction of the device main body 100.

In one embodiment, the number of the sky speaker 200 is two. The two sky speakers 200 are spaced apart from each other in the width direction of the top surface 110, and the width direction is perpendicular to the image output direction of the device main body 100.

In the embodiment where the surrounding surface 120 includes the front surface, the first side surface, the back surface, and the second side surface, the width direction of the top surface 110 is the direction from the first side surface to the second side surface, and the two sky speakers 200 are spaced apart from each other in the width direction, ensuring better upward sound effect and louder volume. In addition, in conjunction with position characteristics of the user, the sound effect on both sides of the device main body 100 is enhanced, improving sound reception efficiency for the user and avoiding sound loss.

To further ensure the sound effect of the two sky speakers 200, the center distance between the two sky speakers 200 is greater than half of the extension distance of the top surface 110 in the width direction. In this way, the distance between the two sky speakers 200 is large enough and the two sky speakers are more proximal to the first side and the second side, respectively, thereby providing the upward sound effect in a larger range and at positions more proximal to the user.

In one embodiment, the surrounding surface of the device main body includes the front surface, the first side surface, the back surface, and the second side surface that are sequentially connected end to end. The device main body outputs the image through the front surface. The side speaker is arranged on at least one of the front face, the back face, the first side face, and the second side face.

In one embodiment, the device main body 100 is configured to project the image through the top surface 110, and the projection direction may be inclined upward. Alternatively, in some other embodiments, the device main body 100 may further project the image through the surrounding surface 120, for example, project the image through the front surface, and the projection direction may be horizontal.

In the embodiment where the device main body 100 is configured to project the image through the top surface 110, the recess 111 is arranged on the top surface 110, the recess 111 extends in the width direction of the top surface 110, a projection window is arranged on the recess 111, and the device main body 100 is configured to project the image through the projection window. One sky speaker is located at the center of the projection window. In another embodiment, two sky speakers 200 are arranged on both sides of the projection window.

The recess 111 is a strip-shaped recess, and side walls of the recess 111 gradually approach each other in a direction away from the opening of the recess 111 to form inclined side walls. The projection window may be a window extending in the width direction of the top surface 110, and the inclination angle of the window is adapted to the side wall of the recess 111. The device main body 100 includes a light source for projecting the image. The image output unit is arranged corresponding to the projection window, and the projection direction is perpendicular to the projection window, thereby enabling short-throw tilted projection of the image. The two sky speakers 200 are arranged on both sides of the projection window and are partially located in the recess 111. The sound output ends of the sky speakers 200 may slightly protrude from the opening of the recess 111, for example, by 3 mm or 5 mm, to ensure a neat appearance of the audio-visual device.

In one embodiment, the device main body 100 is configured to project the image onto the projection surface. The surrounding surface 120 of the device main body 100 includes a front surface opposite to the projection surface and a back surface facing away from the front surface. The side speaker 300 is arranged on the back surface.

As shown in FIG. 1, the number of the side speaker 300 may be one, the side speaker 300 may be arranged on the back surface, and the sound propagation direction of the side speaker 300 faces the user, which can ensure that the sound encounters as few obstacles as possible in the process of the propagation to the user, thereby making the sound effect more realistic. Alternatively, in other embodiments, as shown in FIG. 2, the side speaker 300 may be arranged on one of the first side surface and the second side surface, to achieve sound generation from the side surface. Alternatively, the number of the side speaker 300 is two or more. When the number of the side speaker 300 is two, the two side speakers are arranged on the first side surface and the second side surface, respectively, to achieve the sound generation from more directions. Alternatively, the side speakers 300 may be simultaneously arranged on the back surface and the side surface. For example, the side speakers 300 are arranged on both the first side surface and the back surface, to achieve the generation of a more enhanced three-dimensional sound effect. In some other embodiments, the two side speakers 300 may also be both arranged on the back surface.

The speaker body is the main sound generation structure, the speaker sound chamber typically includes a sealed space enclosed by a rear sound chamber box and a front sound chamber, and the speaker body is located in the sealed space to ensure sound generation quality of the speaker body. The volume of the speaker sound chamber is relatively large, especially the rear sound chamber, which requires a sufficiently large volume to ensure that the speaker has an adequate gas environment for vibration and sound generation. However, this requirement conflicts with the requirement for a small volume of the audio-visual device. To balance the small volume and portability of the audio-visual device with the excellent sound effect, two sound chamber configurations for the sky speaker 200 and the side speaker 300 are provided in this embodiment, specifically as follows:
I. The sky speaker 200 includes a sky speaker body and a sky speaker sound chamber, and the side speaker 300 includes a side speaker body and a side speaker sound chamber. The sky speaker sound chamber is connected to the sky speaker body, and the side speaker sound chamber is connected to the side speaker body. The volume of the sky speaker sound chamber is smaller than the volume of the side speaker sound chamber.
   Since the sound effect of the sky speaker 200 is not affected by the position of the user, the fluctuation range of the sound volume of the sky speaker 200 does not need to be excessively large to ensure a good user experience. Therefore, the volume of the side speaker sound chamber is set to be relatively large, while the volume of the sky speaker sound chamber is set to be relatively small. By reducing the space occupied by the sky speaker sound chamber, both high sound effect and small volume can be achieved.
II. The audio-visual device further includes a common sound chamber, and both the sky speaker 200 and the side speaker 300 are connected to the common sound chamber.

The sky speaker 200 and the side speaker 300 refer to the speaker body for the sound generation, and are not provided with the sound chamber themselves. Both the sky speaker 200 and the side speaker 300 are simultaneously arranged in one common sound chamber, so that the space occupied by the sound chamber is greatly reduced while the sound effect of the sky speaker 200 and the side speaker 300 is ensured. In the embodiment where a plurality of sky speakers 200 and a plurality of side speakers 300 are provided, for example, two side speakers 300 are provided and arranged on two opposite sides of the surrounding surface 120 of the device main body 100, respectively, and two sky speakers 200 are also provided and arranged corresponding to the two side speakers 300, respectively. The number of the common sound chambers is also two, with each adjacent sky speaker 200 and side speaker 300 sharing one common sound chamber.

In one embodiment, the device main body 100 includes a housing, an image output unit, and a control unit. The housing includes an accommodating cavity, and the image output unit includes a camera. The light source and the control unit are arranged in the accommodating cavity, and both the sky speaker 200 and the side speaker 300 are partially located in the accommodating cavity and are connected to the housing. The control unit is electrically connected to the image output unit, the sky speaker 200, and the side speaker 300. The housing includes the top surface 110 and the surrounding surface 120. The recess 111 is arranged on the top surface 110, the projection window is arranged on the recess 111, two sky speakers 200 are further connected to the top surface 110, and the side speaker 300 is arranged on the surrounding surface 120.

For example, in the embodiment where the surrounding surface includes the front surface, the first side surface, the back surface, and the second side surface that are sequentially connected end to end, the side speaker 300 may be arranged on the back surface, and the side speaker opening can be arranged on the back surface. The side speaker 300 is completely located in the accommodating cavity, the sound generation side of the side speaker 300 faces the side speaker opening, and the side speaker opening may include a plurality of circular or strip-shaped holes. Alternatively, the side speaker 300 may be connected to the back surface, and the sound generation side of the side speaker 300 is located outside the accommodating cavity. The sky speaker 200 is arranged on the top surface 110. The sky speaker opening may be arranged on the top surface 110, the sky speaker 200 is completely located in the accommodating cavity, the sound generation side of the sky speaker 200 faces the sky speaker opening, and the sky speaker opening may include a plurality of circular or strip-shaped holes. Alternatively, the sky speaker 200 is connected to the top surface 110, and the sound generation side of the sky speaker 200 is located outside the accommodating cavity, for example, the aforementioned opening protruding from the recess 111. The control unit is configured to transmit video information to the laser device of the image output unit, and synchronously transmit audio information to the sky speaker 200 and the side speaker 300. The audio information is electrical signals that trigger vibration of the sky speaker 200 and the side speaker 300, and the electrical signals of the sky speaker 200 and the side speaker 300 may be consistent or inconsistent. For example, when simulating the falling of an object, the electrical signals may be controlled to make the sky speaker 200 vibrate intensely first to generate a relatively loud sound, and then gradually reduce the vibration of the sky speaker 200 while gradually increasing the vibration of the side speaker 300, so that the sound moves from the top of the device main body 100 to the side surface, thereby achieving the sound effect of the sound moving from a high position to a low position.

In one embodiment, as shown in FIG. 2, the device main body 100 further includes a heat dissipation unit, and the heat dissipation unit is arranged in the accommodating cavity and is electrically connected to the control unit. A heat dissipation opening 112 is formed on the surrounding surface 120, and the heat dissipation unit corresponds to the heat dissipation opening 112 to dissipate heat through the heat dissipation opening 112.

The heat dissipation unit may include a heat dissipation fin and a fan. The heat dissipation fin is connected to the image output unit and/or the control unit. A plurality of fans may be provided. As shown in FIG. 1, four fans are arranged to discharge hot air in the accommodating cavity of the housing to the outside of the housing, to cool the accommodating cavity of the housing, thereby ensuring effective working of the laser device of the image output unit, the control unit, the sky speaker 200, the side speaker 300, and other components. The four fans may be arranged in pairs on two opposite sides of the device main body 100, aiming to dissipate heat in various directions and at various positions. In one embodiment, the heat dissipation opening 112 is formed on the surrounding surface 120, and may be located on a different side of the surrounding surface 120 from the side speaker 300, to avoid affecting the sound effect of the side speaker 300.

Those skilled in the art can easily understand that the above advantageous methods can be freely combined and superimposed on the premise of no conflict.

The above descriptions are only preferred embodiments of the present application and should not be taken as limiting the present application, and any modifications, equivalents, improvements and the like that are made within the spirit and principle of the present application should be included in the protection scope of the present application. The above descriptions are only preferred embodiments of the present application. It should be noted that those of ordinary skill in the technical field may make several improvements and variations without departing from the technical principles of the present application, and such improvements and variations shall fall within the protection scope of the present application.

## Claims

1. An audio-visual device, comprising a device main body, wherein the device main body comprises a top surface and a surrounding surface surrounding the top surface; and
a sky speaker and a side speaker, wherein the sky speaker is arranged on the top surface, and the side speaker is arranged on the surrounding surface.

2. The audio-visual device according to claim 1, wherein a number of the sky speakers is two, the two sky speakers are spaced apart from each other in a width direction of the top surface, and the width direction is perpendicular to an image output direction of the device main body.

3. The audio-visual device according to claim 2, wherein a center distance between the two sky speakers is greater than half of an extension distance of the top surface in the width direction.

4. The audio-visual device according to claim 2, wherein the device main body is configured to project an image through the top surface;
a recess is arranged on the top surface, the recess extends in the width direction of the top surface, a projection window is provided on the recess, and the device main body is configured to project the image through the projection window;
the two sky speakers are arranged on both sides of the projection window.

5. The audio-visual device according to claim 1, wherein a sound propagation direction of the sky speaker is vertically upward or inclined upward.

6. The audio-visual device according to claim 1, wherein the device main body is configured to project an image onto a projection surface, the surrounding surface of the device main body is formed by sequentially connecting a front surface, a first side surface, a back surface, and a second side surface end to end, and the front surface is opposite to the projection surface;
the side speaker is arranged on the back surface, the first side surface, and/or the second side surface.

7. The audio-visual device according to claim 1, wherein the sky speaker comprises a sky speaker body and a sky speaker sound chamber, and the side speaker comprises a side speaker body and a side speaker sound chamber;
the sky speaker sound chamber is connected to the sky speaker body, and the side speaker sound chamber is connected to the side speaker body.

8. The audio-visual device according to claim 1, further comprising: a common sound chamber, wherein both the sky speaker and the side speaker are connected to the common sound chamber.

9. The audio-visual device according to claim 1, wherein the device main body comprises a housing, an image output unit, and a control unit;
the housing comprises an accommodating cavity, the image output unit, the control unit, the sky speaker, and the side speaker are all at least partially arranged in the accommodating cavity, and the control unit is electrically connected to the image output unit, the sky speaker, and the side speaker;
the housing comprises the top surface and the surrounding surface, a projection window is arranged on the top surface, and the image output unit corresponds to the projection window to output an image through the projection window.

10. The audio-visual device according to claim 9, wherein the device main body further comprises a heat dissipation unit, and the heat dissipation unit is arranged in the accommodating cavity and is electrically connected to the control unit;
a heat dissipation opening is formed on the surrounding surface, and the heat dissipation unit corresponds to the heat dissipation opening to dissipate heat through the heat dissipation opening.
